# EUROPEAN PATENT APPLICATION

(11) **EP 3 901 211 A2**
(43) Date of publication of application: **27.10.2021**
(21) Application number: 21167203.5
(22) Date of filing: 07.04.2021
(51) Int. Cl.: C08L 23/22

(54) **THERMOPLASTIC ELASTOMER COMPOSITION AND MOLDED BODY**

(30) Priority: 21.04.2020 JP 2020075246
(71) Applicant: JSR Corporation, Minato-ku Tokyo 105-8640 (JP)
(72) Inventor: USUI, Ryoji, Tokyo 105-8640 (JP); SUZUKI, Yoshinobu, Tokyo 105-8640 (JP); NAKANISHI, Hideo, Tokyo 105-8640 (JP)
(74) Representative: TBK

(57) **Abstract**

A thermoplastic elastomer composition according to the present disclosure includes a component (A): an elastomer having a glass transition temperature of 0°C or lower, having at least one structural unit of a structural unit that is a hydrogenated isoprene-derived structure and an isobutene-derived structural unit, and having an unsaturated bond; a component (B): an α-olefin-based thermoplastic resin (where a 4-methyl-1-pentene α-olefin copolymer and a case corresponding to a component (E) to be described later are excluded); a component (C): an aromatic petroleum resin, an aliphatic petroleum resin, an aliphatic/aromatic petroleum resin, a dicyclopentadiene-based petroleum resin, a terpene resin, a rosin derivative, a 4-methyl-1-pentene α-olefin copolymer, and hydrogenated substances thereof; and a component (D): a crosslinking agent, in which the thermoplastic elastomer composition is formed by dynamic crosslinking of a mixture containing the component (A), the component (B), and the component (C) in the presence of the component (D).

## Description

### BACKGROUND

### Technical Field

The present application is based on Japanese Patent Application No. 2020-075246 filed April 21, 2020, the contents of which are incorporated herein by reference.

The present disclosure relates to a thermoplastic elastomer composition, and a molded body produced using the same.

### Description of Related Art

A molded body is required to have damping properties in addition to general material characteristics including shock resistance, heat resistance, strength, and dimensional stability when the molded body is used for usage applications such as parts for electrical and electronic instruments including personal computers, OA instruments, AV instruments, mobile phones, optical instruments, precision instruments, and home and office electrical appliances, toys, and the like; or parts for housing, traffic and transportation industry fields including railway vehicles, automobiles, ships, and aircrafts, building materials, and the like. Accordingly, a damping material is used for such a molded body.

Damping properties required for the damping material can be evaluated from, for example, a loss tangent tan δ, which is a ratio (G"/G') between a storage elastic modulus (G') and a loss elastic modulus (G"). That is, as tan δ under a temperature environment in which the damping material is used becomes higher, a higher viscosity is exhibited, and thereby stress due to vibration is more easily absorbed, and more enhanced damping properties are exhibited. Meanwhile, tan δ changes according to temperature. Accordingly, a technique has been developed to adjust a maximum value of tan δ of the damping material (hereinafter, also referred to as a "tan δ peak value") and a temperature at which a value of tan δ is maximum (hereinafter, also referred to as a "tan δ peak temperature") to within a specific range.

For example, Patent Document 1 discloses a shock absorber composition including a copolymer containing an aromatic vinyl compound such as styrene, in which a tan δ peak temperature obtained by dynamic viscoelasticity measurement (1 Hz) of the copolymer is within a range of higher than 0°C and equal to or lower than 20°C, a tan δ value is 0.4 or more within the entire temperature range of 5°C to 15°C, and a tan δ value is 0.5 or more at 15°C.

Patent Document 1: WO 2008/102761A

### SUMMARY

However, in the composition including the copolymer containing styrene as disclosed in Patent Document 1, sufficient damping properties could not be obtained in some cases, because a tan δ peak temperature is likely to become low, and a tan δ value is small at room temperature (for example, 23°C).

Some aspects according to the present disclosure provide a thermoplastic elastomer composition that enables a further increase in tan δ at 23°C, and a molded body produced using the thermoplastic elastomer composition and having excellent damping properties.

One aspect of a thermoplastic elastomer composition according to the present disclosure is a thermoplastic elastomer composition including:
a component (A): an elastomer having a glass transition temperature of 0°C or lower, having at least one structural unit of a structural unit that is a hydrogenated isoprene-derived structure and an isobutene-derived structural unit, and having an unsaturated bond;
a component (B): an α-olefin-based thermoplastic resin (where a 4-methyl-1-pentene α-olefin copolymer and a case corresponding to a component (E) to be described later are excluded);
a component (C): an aromatic petroleum resin, an aliphatic petroleum resin, an aliphatic/aromatic petroleum resin, a dicyclopentadiene-based petroleum resin, a terpene resin, a rosin derivative, a 4-methyl-1-pentene α-olefin copolymer, and hydrogenated substances thereof; and
a component (D): a crosslinking agent,
in which the thermoplastic elastomer composition is formed by dynamic crosslinking of a mixture containing the component (A), the component (B), and the component (C) in the presence of the component (D).

In another aspect of the thermoplastic elastomer composition,
the component (A) may be an isobutene-isoprene copolymer.

In any of the above aspects of the thermoplastic elastomer composition,
the component (D) may be a polycondensation product of a phenol compound and an aldehyde.

In any of the above aspects of the thermoplastic elastomer composition, a glass transition temperature of the component (C) may be 50°C or higher.

In any of the above aspects of the thermoplastic elastomer composition,
20 to 90 parts by mass of the component (B) and 20 to 70 parts by mass of the component (C) may be contained with respect to 100 parts by mass of the component (A).

In any of the above aspects of the thermoplastic elastomer composition,
the thermoplastic elastomer composition may further include a component (E): a polymer having a structure represented by General Formula (1), having a melting point of 25°C or higher, and having a durometer hardness of 90 A or less, 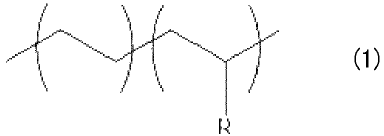 (In Formula (1), R represents an alkyl group having 1 to 8 carbon atoms)

In any of the above aspects of the thermoplastic elastomer composition,
the component (E) may contain the following hydrogenated diene-based block polymer,
hydrogenated diene-based block polymer: a hydrogenated substance which is a triblock polymer represented by an A-B-A triblock polymer, in which a content of a 1,2-vinyl group in the A block is less than 25 mol% and a content of a 1,2-vinyl group in the B block is 25 mol% or more; a total content of the A blocks is 5 to 90 mass% and a content of the B block is 10 to 95 mass% in a case where a total mass of the triblock polymer is 100 mass%; 80% or more of double bonds derived from a conjugated diene monomer unit contained in the triblock polymer are hydrogenated; and a number average molecular weight after hydrogenation is 50,000 to 700,000.

In any of the above aspects of the thermoplastic elastomer composition,
3 to 30 parts by mass of the component (E) may be contained with respect to 100 parts by mass of the component (A).

One aspect of a molded body according to the present disclosure is a molded body produced using the thermoplastic elastomer composition of any of the above aspects.

Another aspect of the molded body may be a damping member.

Still another aspect of the molded body may be a shock absorber.

Still another aspect of the molded body may be a vibration dampener.

Still another aspect of the molded body may be a resonant absorber.

According to a thermoplastic elastomer composition according to the present disclosure, tan δ at 23°C can be further increased, and thereby various vibrations can be effectively inhibited. Accordingly, a molded body produced using the thermoplastic elastomer composition according to the present disclosure can be used as a material for inhibiting various vibrations, that is, a material such as a damping member, a shock absorber, a vibration dampener, and a resonant absorber.

### DESCRIPTION OF THE EMBODIMENTS

Hereinafter, preferred embodiments according to the present disclosure will be described in detail. The present disclosure is not limited to embodiments described below and should be understood to include various modification examples carried out within a range not changing the gist of the present disclosure.

In the present specification, a numerical value range described as "X to Y" is interpreted as a range including a numerical value X as a lower limit value and a numerical value Y as an upper limit value.

In the present specification, the following (A), (B), (C), (D), and (E) may be respectively abbreviated and used as a "component (A)," a "component (B)," a "component (C)," a "component (D)," and a "component (E)." (A): an elastomer having a glass transition temperature of 0°C or lower, having at least one structural unit of a structural unit that is a hydrogenated isoprene-derived structure and an isobutene-derived structural unit, and having an unsaturated bond; (B): an α-olefin-based thermoplastic resin; (C): an aromatic petroleum resin, an aliphatic petroleum resin, an aliphatic/aromatic petroleum resin, a dicyclopentadiene-based petroleum resin, a terpene resin, a rosin derivative, a 4-methyl-1-pentene α-olefin copolymer, and hydrogenated substances thereof; (D): a crosslinking agent; and (E): a polymer having a structure represented by General Formula (1), having a melting point of 25°C or higher, and having a durometer hardness of 90 A or less.

### 1.1. Thermoplastic elastomer composition

A thermoplastic elastomer composition according to one embodiment of the present disclosure is a thermoplastic elastomer composition including:
(A): an elastomer having a glass transition temperature of 0°C or lower, having at least one structural unit of a structural unit that is a hydrogenated isoprene-derived structure and an isobutene-derived structural unit, and having an unsaturated bond;
(B): an α-olefin-based thermoplastic resin (where a 4-methyl-1-pentene α-olefin copolymer and a case corresponding to a component (E) to be described later are excluded);
(C): an aromatic petroleum resin, an aliphatic petroleum resin, an aliphatic/aromatic petroleum resin, a dicyclopentadiene-based petroleum resin, a terpene resin, a rosin derivative, a 4-methyl-1-pentene α-olefin copolymer, and hydrogenated substances thereof; and
(D): a crosslinking agent,
in which the thermoplastic elastomer composition is formed by dynamic crosslinking of a mixture containing (A), (B), and (C) in the presence of (D).

Hereinafter, each of the components contained in the thermoplastic elastomer composition according to the present embodiment (hereinafter, also simply referred to as the "composition") will be described.

### 1.1. Component (A)

The thermoplastic elastomer composition according to the present embodiment includes (A): an elastomer having a glass transition temperature of 0°C or lower, having an isoprene-derived structure that has at least one of a hydrogenated structural unit and an isobutene-derived structural unit, and having an unsaturated bond.

A glass transition temperature of the component (A) is 0°C or lower, and it is preferably -10°C or lower, is more preferably -20°C or lower, and is particularly preferably -30°C or lower. When a glass transition temperature of the component (A) is 0°C or lower, flexibility can be maintained even at a low temperature when the composition is prepared. A lower limit of the glass transition temperature of the component (A) is not particularly limited, but it is, for example, -100°C or higher.

In addition, the component (A) has at least one of a structural unit that is a hydrogenated isoprene-derived structure and an isobutene-derived structural unit. Examples of methods of introducing these structures into a molecule include a method of partially hydrogenating a random copolymer or block copolymer of isoprene, a method of copolymerizing isobutene and isoprene, a method of copolymerizing a conjugated diene compound other than isobutene and isoprene, and the like. It is possible to obtain an elastomer having an unsaturated bond by introducing a desired structural unit using those methods. Furthermore, the component (A) may be a halogenated elastomer obtained by reacting an isoprene-derived structure with chlorine, bromine, or the like. Among them, the component (A) is preferably an isobutene-isoprene copolymer obtained by copolymerizing isobutene and isoprene.

In a case of manufacturing the component (A) by partially hydrogenating a random copolymer or block copolymer of isoprene, a hydrogenation rate may be 10% to 99%, and it is preferably 20% to 97% and is more preferably 30% to 95%. Furthermore, in a case of manufacturing the component (A) by copolymerizing isobutene and a conjugated diene compound such as isoprene, a usage ratio of the conjugated diene compound is generally 0.1 to 5 mol% when a total of the isobutene and the conjugated diene compound is 100 mol%.

As the component (A), a commercially available product can be used. Examples of commercially available products of the component (A) include JSR BUTYL 065, JSR BUTYL 268, JSR BUTYL 365, and JSR BROMOBUTYL 2244 (all of which are manufactured by JSR Corporation), HYBRAR 7125F and HYBRAR 7311F (both manufactured by Kuraray Co., Ltd.), and the like.

For the component (A) in the thermoplastic elastomer composition according to the present embodiment, one kind may be used alone, or two or more kinds may be used in combination.

### 1.2. (B) α-Olefin-based thermoplastic resin

The thermoplastic elastomer composition according to the present embodiment contains (B) an α-olefin-based thermoplastic resin. It is possible to impart mechanical strength and heat resistance to the composition by incorporating the component (B). In addition, the component (B) also plays a role of lowering a melt viscosity of the composition to impart fluidity, thereby preventing solidification during a flow process in a die.

As an α-olefin, an α-olefin having 2 to 8 carbon atoms is preferable. Specific examples of α-olefins include ethylene, propylene, 1-butene, 1-pentene, 1-hexene, 1-heptene, 1-octene, 3-methyl-1-butene, 3-methyl-1-pentene, 4-methyl-1-pentene, 2-ethyl-1-hexene, 2,2,4-trimethyl-1-pentene, and the like. When synthesizing the component (B), one kind of these α-olefins may be used alone, or two or more kinds thereof may be used in combination.

The component (B) can be synthesized by a known manufacturing method using a known composition, and for example, it can be synthesized by a manufacturing method using a composition which are disclosed in Japanese Patent Laid-Open No. 2014-193969 and the like. Alternatively, a commercially available product can be used.

Among examples for the component (B), α-olefin-based thermoplastic resins such as polyethylene, polypropylene, and polyethylene-propylene are preferable. For these resins as the component (B), one kind may be used alone, or two or more kinds may be used in combination.

A content of the component (B) in the thermoplastic elastomer composition according to the present embodiment is not particularly limited as long as it is a content at which the effects of the present disclosure are exhibited, but in order to maintain various performances to a high degree, it is preferably 20 to 90 parts by mass, is more preferably 25 to 80 parts by mass, and is particularly preferably 30 to 70 parts by mass, with respect to 100 parts by mass of the component (A).

### 1.3. Component (C)

The thermoplastic elastomer composition according to the present embodiment contains (C): an aromatic petroleum resin, an aliphatic petroleum resin, an aliphatic/aromatic petroleum resin, a dicyclopentadiene-based petroleum resin, a terpene resin, a rosin derivative, a 4-methyl-1-pentene α-olefin copolymer, and hydrogenated substances thereof. The component (C) is blended in for the purpose of increasing a value of tan δ of the composition at near room temperature (for example, 23°C). Increasing tan δ at near room temperature improves a performance of a molded body, which is produced using the thermoplastic elastomer composition according to the present embodiment, as a member inhibiting various vibrations.

An aromatic petroleum resin, an aliphatic petroleum resin, an aliphatic/aromatic petroleum resin, and a dicyclopentadiene-based petroleum resin can be manufactured according to a conventional method. For example, they can be manufactured by addition polymerization of a monomer mixture using a Friedel-Crafts type cationic polymerization catalyst. A method of preparing the monomer mixture is not particularly limited, and for example, a desired monomer mixture may be obtained using a mixture derived from a fraction of a naphtha decomposition product and containing a monomer of a C5 fraction/C9 fraction from which isoprene and the like have been extracted. After the addition polymerization, a hydrogenation reaction may be carried out by a known method.

The terpene resin is a resin having isoprene as a structural unit. Examples thereof include polyterpene which is a resin having isoprene as a structural unit and consisting only of terpene. Furthermore, it may be a terpene resin having a structural unit other than terpene, such as an aromatic-modified terpene resin, a terpene phenolic resin, and a hydrogenated terpene phenolic resin.

Examples of rosin derivatives include rosin, polymerized rosin, hydrogenated rosin, esters from glycerin or pentaerythritol thereof, resin acid dimers, and the like.

The 4-methyl-1-pentene α-olefin copolymer may be manufactured by a known method, or a commercially available product may be used.

For these components as the component (C), one kind may be used alone, or two or more kinds may be used in combination.

A glass transition temperature of the component (C) is preferably 50°C or higher, is more preferably 70°C or higher, and is particularly preferably 80°C or higher. When a glass transition temperature of the component (C) is 50°C or higher, tan δ at near room temperature is easily increased, and thereby a performance of a molded body, which is produced using the thermoplastic elastomer composition according to the present embodiment, as a damping material inhibiting various vibrations is further improved in some cases.

A content of the component (C) in the thermoplastic elastomer composition according to the present embodiment is preferably 20 to 70 parts by mass, is more preferably 25 to 65 parts by mass, and is particularly preferably 30 to 60 parts by mass, with respect to 100 parts by mass of the component (A). When a content of the component (C) is less than the lower limit value, a vibration inhibiting performance may deteriorate. When a content of the component (C) is more than the upper limit value, workability may deteriorate.

### 1.4. Component (D)

The thermoplastic elastomer composition according to the present embodiment is obtained by dynamic crosslinking of a mixture containing the component (A), the component (B), and the component (C) in the presence of (D): a crosslinking agent. Examples of the component (D) include an organic peroxide, sulfur, a sulfur compound, and a phenolic resin-based crosslinking agent containing a phenolic resin. Among them, a phenolic resin-based crosslinking agent is preferable.

The phenolic resin-based crosslinking agent is preferably a polycondensation product of a phenol compound and an aldehyde, and typical examples thereof include a resol resin obtained by condensing an alkyl-substituted or unsubstituted phenol with an aldehyde compound such as formaldehyde in the presence of an alkali catalyst. An alkyl group of the alkyl-substituted phenol is preferably an alkyl group having 1 to 10 carbon atoms, and a part of hydrogen atoms in the alkyl group may be substituted with a halogen atom. In particular, dimethylolphenols or phenolic resins substituted with an alkyl group having 1 to 10 carbon atoms or an alkyl halide group are preferable. Furthermore, all or a part of terminal hydroxyl groups of the phenolic resin may be substituted with halogen.

A formulation ratio of (D): a crosslinking agent is preferably 0.01 parts by mass or more and 15 parts by mass or less, and is more preferably 0.03 parts by mass or more and 12 parts by mass or less, when the component (A) is 100 parts by mass, from the viewpoint that then, dynamic crosslinking occurs more easily, and heat resistance, tensile characteristics, and the like of a molded body is easily adjusted within a desired range.

### 1.5. Component (E)

It is also preferable that the thermoplastic elastomer composition according to the present embodiment contain (E): a polymer having a structure represented by General Formula (1), having a melting point of 25°C or higher, and having a durometer hardness of 90 A or less. When the thermoplastic elastomer composition according to the present embodiment contains the component (E), each of characteristics such as tensile strength, tensile elongation, and compression permanent deformation in a molded body produced using the thermoplastic elastomer composition according to the present embodiment can be improved in some cases. 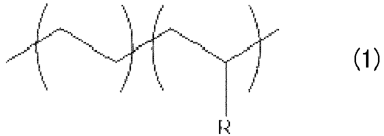 (In Formula (1), R represents an alkyl group having 1 to 8 carbon atoms)

Examples of alkyl groups having 1 to 8 carbon atoms represented by R in Formula (1) include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a tert-pentyl group, an n-hexyl group, an isohexyl group, a 3-methylpentyl group, a neohexyl group, a diisopropyl group, an n-heptyl group, a 1-methylhexyl group, a 1-ethylpentyl group, a 2-ethylpentyl group, a 1-propylbutyl group, a 2-propylbutyl group, an n-octyl group, a 1-methylheptyl group, a 1-ethylhexyl group, a 2-ethylhexyl group, a 1-propylpentyl group, a 2-propylpentyl group, and the like.

A melting point of the component (E) is 25°C or higher, but it is preferably 40°C or higher and is more preferably 60°C or higher. On the other hand, a melting point of the component (E) is preferably 200°C or lower and is more preferably 170°C or lower.

A durometer hardness of the component (E) is 90 A, but it is preferably 85 A and is more preferably 80 A. On the other hand, a durometer hardness of the component (E) is preferably 20 A or more and is more preferably 30 A or more.

When the component (E) has a melting point of 25°C or higher and a durometer hardness of 90 A or less, it is possible to improve each of characteristics of tensile strength, tensile elongation, and compression permanent deformation.

Examples of the component (E) include a copolymer of ethylene and α-olefin (and optionally, with other monomers), a hydrogenated substance of this copolymer, and the like. In the case of a hydrogenated substance of the copolymer of ethylene and α-olefin (and optionally, with other monomers), a hydrogenation rate is preferably 80% or more.

Specific examples of the component (E) include an ethylene-propylene random copolymer, an ethylene-propylene block copolymer, an ethylene (ethylene-propylene) block copolymer, a copolymer in which some or all of propylenes in these copolymers are converted into α-olefins having 4 to 10 carbon atoms, or a hydrogenated diene-based polymer hydrogenated with a block polymer having polybutadiene chains with different vinyl group contents. For these examples, one kind may be used alone, or two or more kinds may be used in combination.

Among them, the component (E) is preferable to contain the following specific hydrogenated diene-based block copolymer.

### [Specific hydrogenated diene-based block copolymer]

The specific hydrogenated diene-based block copolymer is a hydrogenated substance which is a triblock polymer represented by an A-B-A triblock polymer, in which a content of a 1,2-vinyl group in the A block is less than 25 mol% and a content of a 1,2-vinyl group in the B block is 25 mol% or more; a total content of the A blocks is 5 to 90 mass% and a content of the B block is 10 to 95 mass% in a case where a total mass of the triblock polymer is 100 mass%; 80% or more of double bonds derived from a conjugated diene monomer unit contained in the triblock polymer are hydrogenated; and a number average molecular weight after hydrogenation is 50,000 to 700,000. The A block and the B block are blocks before hydrogenation.

The "content of a 1,2-vinyl group" in the present specification refers to a content of a 1,2-vinyl bond among a cis-1,4-bond, a trans-1,4-bond, and a 1,2-vinyl bond, where the content is calculated by a Morello method using infrared absorption spectroscopy. The content of a 1,2-vinyl group means a content of a 1,2-vinyl group of a polymer before hydrogenation.

The A block is preferably a polymer block containing 1,3-butadiene as a main component. The phrase "containing 1,3-butadiene as a main component" means that 90 mass% or more, preferably 95 mass% or more of a total mass of repeating units of the A block is a repeating unit derived from 1,3-butadiene. Furthermore, from the viewpoint of inhibiting a decrease in melting point of crystals after hydrogenation and maintaining mechanical strength, a content of a 1,2-vinyl group in the A block is less than 25 mol%, and it is preferably 20 mol% or less and is more preferably 15 mol% or less.

A number average molecular weight (Mn) of the A blocks is preferably 25,000 to 650,000, and is more preferably 50,000 to 450,000. When a number average molecular weight (Mn) is 25,000 or more, mechanical physical properties tend to be improved. When a number average molecular weight (Mn) is 650,000 or less, workability tends to be improved. The specific hydrogenated diene-based block copolymer has the A blocks at both ends, and a number average molecular weight (Mn) of the A blocks means a total number average molecular weight (Mn) of the A blocks at both ends.

The B block is a conjugated diene polymer block having a structural unit derived from a conjugated diene compound. Examples of conjugated diene compounds include 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, 3-butyl-1,3-octadiene, chloroprene, and the like. Among them, 1,3-butadiene, isoprene, and 1,3-pentadiene are preferable, and 1,3-butadiene is more preferable. The B block may be composed of two or more kinds of monomer units.

A content of a 1,2-vinyl group in the B block is 25 mol% or more, and it is preferably more than 25 mol% and 95 mol% or less, and is more preferably more than 25 mol% and 85 mol% or less. A content of a 1,2-vinyl group in the B block is preferably 25 mol% or more from the viewpoint of maintaining flexibility of the specific hydrogenated diene-based block copolymer.

A number average molecular weight (Mn) of the B block is preferably 5,000 to 650,000, and is more preferably 20,000 to 550,000. When a number average molecular weight (Mn) is 5,000 or more, mechanical physical properties tend to be improved. When a number average molecular weight (Mn) is 650,000 or less, workability tends to be improved.

The B block in a molecular structure of the specific hydrogenated diene-based block copolymer may contain an aromatic vinyl polymer block. When the B block contains an aromatic vinyl polymer block, from the viewpoint of maintaining flexibility, a content of the aromatic vinyl polymer block is preferably 35 mass% or less, is more preferably 30 mass% or less, and is particularly preferably 25 mass% or less, when a total mass of repeating units of the B block is 100 mass%.

Examples of aromatic vinyl compounds which are a repeating unit of the B block in a molecular structure of the specific hydrogenated diene-based block copolymer include styrene, tert-butylstyrene, α-methyl styrene, p-methylstyrene, p-ethylstyrene, divinylbenzene, 1,1-diphenylstyrene, vinylnaphthalene, vinylanthracene, N,N-diethyl-p-aminoethylstyrene, vinylpyridine, and the like. Among them, styrene is preferable.

A total content of the A blocks is preferably 5 to 90 mass% and is more preferably 10 to 80 mass% when a total mass of the A blocks and the B block contained in the specific hydrogenated diene-based block copolymer is 100 mass%. When a total content of the A blocks is 5 mass% or more, sufficient crystallinity tends to be easily exhibited, and thereby the thermoplastic elastomer composition according to the present embodiment tends to easily form a three-dimensional network structure without depending on chemical crosslinking. On the other hand, when a total content of the A blocks is 90 mass% or less, it is possible to avoid an excessive increase in hardness. The "three-dimensional network structure" in the present specification means that the thermoplastic elastomer composition according to the present embodiment is bonded without depending on chemical crosslinking, and thereby forms a network-like structure in a three-dimensional direction.

A non-hydrogenated diene-based block copolymer can be obtained by living anionic polymerization of an aromatic vinyl compound and a conjugated diene compound, or an aromatic vinyl compound and a conjugated diene compound and other monomers copolymerizable therewith in inert organic solvents such as aliphatic hydrocarbon solvents such as pentane, hexane, heptane, and octane; alicyclic hydrocarbon solvents such as cyclopentane, methylcyclopentane, cyclohexane, and methylcyclohexane; and aromatic hydrocarbon solvents such as benzene, xylene, toluene, and ethylbenzene using an organic alkali metal compound as a polymerization initiator. It is possible to easily obtain the specific hydrogenated diene-based block copolymer by hydrogenating the obtained non-hydrogenated diene-based block copolymer.

Examples of organic alkali metal compounds used as the polymerization initiator include organic lithium compounds, organic sodium compounds, and the like. Among them, organic lithium compounds such as n-butyllithium, sec-butyllithium, and tert-butyllithium are preferable. An amount of the organic alkali metal compound used is not particularly limited, but it is generally 0.02 to 5 parts by mass and is preferably 0.03 to 1.5 parts by mass with respect to 100 parts by mass of monomers.

A polymerization temperature is generally -10°C to 150°C and is preferably 0°C to 120°C. An atmosphere of a polymerization system is preferably replaced with an inert gas such as nitrogen gas. A polymerization pressure is not particularly limited, and it is sufficient for the polymerization pressure to be set within a pressure range sufficient to maintain a monomer and a solvent in a liquid phase. A method of adding a monomer to the polymerization system is not particularly limited, and examples thereof include a batch method, a continuous method, an intermittent method, or a method of a combination thereof.

The non-hydrogenated diene-based block copolymer may be a copolymer in which molecular chains of a plurality of copolymers are bonded via coupling residues. Such a copolymer can be prepared by using a coupling agent with respect to a block copolymer obtained by the above-described method.

Examples of usable coupling agents include divinylbenzene, 1,2,4-trivinylbenzene, epoxidized 1,2-polybutadiene, epoxidized soybean oil, epoxidized flaxseed oil, benzene-1,2,4-triisocyanate, dimethyl oxalate, diethyl phthalate, diethyl terephthalate, diethyl carbonate, 1,1,2,2-tetrachloroethane, 1,4-bis(trichloromethyl)benzene, trichlorosilane, methyltrichlorosilane, methyldichlorosilane, butyltrichlorosilane, tetrachlorosilane, dimethyldichlorosilane, (dichloromethyl)trichlorosilane, hexachlorodisilane, tetraethoxysilane, tetrachlorotin, 1,3-dichloro-2-propanone, and the like.

The specific hydrogenated diene-based block copolymer can be obtained by partially or selectively hydrogenating the non-hydrogenated diene-based block copolymer obtained as described above. A method of hydrogenation and reaction conditions are not particularly limited, and a method is generally carried out at 20°C to 150°C under hydrogen pressurization of 0.1 to 10 MPa in the presence of a hydrogenation catalyst.

A hydrogenation rate can be arbitrarily selected by changing an amount of a hydrogenation catalyst, a hydrogen pressure or a reaction time during a hydrogenation reaction, and the like. As the hydrogenation catalyst, it is possible to use a compound containing any of the elements of the Periodic Table Ib, IVb, Vb, VIb, VIIb, and VIII metal, for example, Ti, V, Co, Ni, Zr, Ru, Rh, Pd, Hf, Re, and Pt atoms. Specific examples thereof include metallocene compounds such as Ti, Zr, Hf, Co, Ni, Pd, Pt, Ru, Rh, and Re; supported heterogeneous catalysts in which metals such as Pd, Ni, Pt, Rh, and Ru are supported on a simple substance such as carbon, silica, alumina, and diatomaceous earth; homogeneous Ziegler-type catalyst that combines an organic salt of a metal element such as Ni or Co or an acetylacetone salt with a reducing agent such as organic aluminum; organometallic compounds or complexes such as Ru and Rh; and fullerenes and carbon nanotubes in which hydrogen is occluded. Among them, a metallocene compound containing any one of Ti, Zr, Hf, Co, and Ni is preferable from the viewpoint that a hydrogenation reaction can be carried out with a uniform system in an inert organic solvent. A metallocene compound containing any one of Ti, Zr, and Hf is more preferable. In particular, a hydrogenation catalyst obtained by reacting a titanocene compound with an alkyllithium is preferable because it is inexpensive and is an industrially particularly useful catalyst. For the hydrogenation catalyst, one kind may be used alone, or two or more kinds may be used in combination. After hydrogenation, the catalyst residue is removed as necessary, or the specific hydrogenated diene-based block copolymer is isolated after adding a phenol-based or amine-based anti-aging agent. The specific hydrogenated diene-based block copolymer can be isolated by, for example, a method of adding acetone, alcohol, or the like to a specific hydrogenated diene-based block copolymer solution to precipitate it, and a method in which a hydrogenated diene-based block copolymer solution is put into boiling water while stirring to remove a solvent by distillation.

A hydrogenation rate of the specific hydrogenated diene-based block copolymer is preferably 80% or more, is more preferably 90% or more, and is particularly preferably 95% to 100%. When a hydrogenation rate is 80% or more, thermal stability and durability tend to be improved.

A number average molecular weight (Mn) of the specific hydrogenated diene-based block copolymer is preferably 50,000 to 700,000, and is more preferably 100,000 to 600,000. When a number average molecular weight (Mn) is 50,000 or more, heat resistance, strength, fluidity, and workability tend to be improved. When a number average molecular weight (Mn) is 700,000 or less, fluidity, workability, and flexibility tend to be improved. The specific hydrogenated diene-based block copolymer can be obtained by, for example, a method disclosed in Japanese Patent Laid-Open No. H03-128957.

The melt flow rate of specific hydrogenated diene-based block copolymer measured under conditions of a temperature of 230°C and a load of 21.2 N in accordance with JIS K 7210 is not particularly limited, but it is preferably 0.1 to 20 g/10 minutes, is more preferably 0.5 to 10 g/10 minutes, and is particularly preferably 1 to 5 g/10 minutes.

A density of the specific hydrogenated diene-based block copolymer measured in accordance with JIS K 7112 is not particularly limited, but it is preferably 0.85 g/cm³ or more and 0.95 g/cm³ or less, and is more preferably 0.86 g/cm³ or more and 0.92 g/cm³ or less.

When a plurality of specific hydrogenated diene-based block copolymers obtained as described above is linked via a coupling agent residue, this copolymer can also be used as the specific hydrogenated diene-based block copolymer. That is, the specific hydrogenated diene-based block copolymer may be [A-B-A]ₙ-X (where n is an integer of 3 or more, and X is a coupling agent residue). Furthermore, as long as a coupling agent residue has a sufficiently small molecular weight with respect to an A block and a B block and is within a range not affecting crystallinity of the specific hydrogenated diene-based block copolymer, the specific hydrogenated diene-based block copolymer may be [A-B]ₙ-X (where n is an integer of 3 or more, and X is a coupling agent residue).

Furthermore, the specific hydrogenated diene-based block copolymer may be a modified hydrogenated diene-based block copolymer modified with a functional group. As this functional group, it is possible to use at least one selected from the group consisting of a carboxy group, an acid anhydride group, a hydroxy group, an epoxy group, a halogen atom, an amino group, an isocyanate group, a sulfonyl group, a sulfonate group, and an oxazoline group. As a modification method, a known method can be used. A content of the functional group in the modified hydrogenated diene-based block copolymer is preferably 0.01 to 10 mol%, is more preferably 0.1 to 8 mol%, and is particularly preferably 0.15 to 5 mol%, when a total of repeating units constituting the modified hydrogenated diene-based block copolymer is 100 mol%. Preferred examples of monomers that can be used for introducing functional groups include acrylic acid, methacrylic acid, itaconic acid, maleic acid, maleic anhydride, glycidyl acrylate, glycidyl methacrylate, allyl glycidyl ether, hydroxyethyl methacrylate, hydroxypropyl methacrylate, hydroxyethyl acrylate, hydroxypropyl acrylate, dimethylaminoethyl methacrylate, and the like.

A content of the component (E) in the thermoplastic elastomer composition according to the present embodiment is preferably 3 to 30 parts by mass with respect to 100 parts by mass of the component (A). It is preferable to use 3 parts by mass or more, and it is more preferable to use 5 parts by mass or more, because it is difficult to obtain an effect of adding the component (E) with a small amount thereof. On the other hand, 25 parts by mass or less is preferable, and 20 parts by mass or less is more preferable, so that the component (E) does not affect other characteristics.

### 1.6. Other components

The following components may be blended in the thermoplastic elastomer composition according to the present embodiment, in addition to the components (A) to (E).

### [Crosslinking aid]

A crosslinking aid can uniformly form crosslinking points and make it difficult for a rapid reaction to occur.

Specific examples of crosslinking aids include crosslinking aids containing sulfur, p-quinone dioxime, p,p'-dibenzoylquinone dioxime, N-methyl-N,4-dinitrosoaniline, nitrobenzene, diphenylguanidine, or trimethylolpropane-N,N'-m-phenylenedimaleimide; and crosslinking aids containing divinylbenzene, triallyl cyanurate, ethylene glycol dimethacrylate, diethylene glycol dimethacrylate, polyethylene glycol dimethacrylate, trimethylolpropane trimethacrylate, a polyfunctional methacrylate monomer containing allyl methacrylate, or a polyfunctional vinyl monomer containing vinyl butyrate or vinyl stearate.

### [Softener]

A softener can increase fluidity of a material during dynamic crosslinking and adjust hardness of a composition to a desired degree.

Specific examples of softeners include petroleum-based softeners containing a process oil, a lubricating oil, paraffins, liquid paraffins, polyethylene waxes, polypropylene waxes, petroleum asphalt, or petrolatum; coal tar-based softeners containing coal tar or coal tar pitch; fat oil-based softeners containing a castor oil, a linseed oil, a rapeseed oil, a soybean oil, or a coconut oil; waxes containing a tall oil, subfactis, beeswax, carnauba wax, or lanolin; fatty acids or fatty acid salts containing ricinoleic acid, palmitic acid, stearic acid, barium stearate, calcium stearate, or zinc laurate; synthetic polymer substances containing naphthenic acid, a pine oil, rosin or its derivatives, a terpene resin, a petroleum resin, a kumaron inden resin, or atactic polypropylene; ester-based softeners containing dioctylphthalate, dioctyl adipate, or dioctyl sebacate; microcrystalline waxes; liquid polybutadiene; modified liquid polybutadiene; liquid polyisoprene; terminal-modified polyisoprene; hydrogenated terminal-modified polyisoprene; liquid thiocol; and a hydrocarbon synthetic lubricating oil. Among them, petroleum-based softeners are preferable, and a process oil is more preferable, from the above viewpoint.

From the above viewpoint, a content of the softener is preferably 10 parts by mass or more and 200 parts by mass or less, and is more preferably 15 parts by mass or more and 150 parts by mass or less, with respect to 100 parts by mass of the component (A).

### [Other additives]

Other additives can be arbitrarily added depending on their usage applications to the thermoplastic elastomer composition according to the present embodiment within a range not impairing the effects of the present disclosure. Examples of such additives include pigments, dyes, fillers, lubricants, plasticizers, mold release agents, antioxidants, flame retardants, ultraviolet absorbers, antibacterial agents, surfactants, antistatic agents, weather-resistant stabilizers, heat-resistant stabilizers, anti-slip agents, anti-blocking agents, foaming agents, foaming aids, crystallization aids, anti-fog agents, (transparent) nucleating agents, anti-aging agents, antacids, shock amelioration agents, crosslinking agents, co-crosslinking agents, crosslinking aids, adhesives, softeners, processing aids, and the like. For each of these additives, one kind may be used alone, or two or more kinds may be used in combination.

Examples of pigments include inorganic pigments (titanium oxide, iron oxide, chromium oxide, cadmium sulfide, and the like), and organic pigments (azolake type, thioindigo type, phthalocyanine type, and anthraquinone type). Examples of dyes include azo type, anthraquinone type, triphenylmethane type, and the like.

Examples of fillers include glass fibers, carbon fibers, silica fibers, metal (stainless steel, aluminum, titanium, copper, and the like) fibers, carbon black, silica, glass beads, silicate (calcium silicate, talc, clay, and the like), metal oxides (iron oxide, titanium oxide, alumina, and the like), metal carbonates (calcium sulphate and barium sulphate), powders of various metals (magnesium, silicon, aluminum, titanium, copper, and the like), mica, glass flakes, and the like. For these fillers, one kind may be used alone, or two or more kinds may be used in combination.

Examples of lubricants include waxes (carnauba wax and the like), higher fatty acids (stearic acid and the like), higher fatty acid salts (calcium stearate and the like), higher alcohols (stearyl alcohol and the like), higher fatty acid amides (stearic acid amide and the like), and the like.

Examples of plasticizers include aromatic carboxylic acid ester (dibutyl phthalate and the like), aliphatic carboxylic acid ester (methylacetyl ricinolate and the like), aliphatic dicarboxylic acid ester (adipic acid-propylene glycol polyester and the like), aliphatic tricarboxylic acid ester (triethyl citrate and the like), phosphoric acid triester (triphenyl phosphate and the like), epoxy fatty acid ester (epoxybutyl stearate and the like), a petroleum resin, and the like.

Examples of mold release agents include lower alcohol (C1 to C4) esters of higher fatty acids (butyl stearate and the like), polyhydric alcohol (C4 to C30) esters of fatty acids (hardened castor oil and the like), glycol esters of fatty acids, liquid paraffin, and the like.

Examples of antioxidants include antioxidants such as phenolic-based antioxidants (2,6-di-tert-butyl-4-methylphenol and the like), polycyclic phenolic-based antioxidants (2,2'-methylenebis(4-methyl-6-tert-butylphenol) and the like), phosphorus-based antioxidants (tetrakis(2,4-di-tert-butylphenyl)-4,4-biphenylenediphosphonate and the like), and amine-based antioxidants (N,N-diisopropyl-p-phenylenediamine and the like).

Examples of flame retardants include organic flame retardants (nitrogen-containing, sulfur-containing, silicon-containing, and phosphorus-containing flame retardants, and the like), and inorganic flame retardants (antimony trioxide, magnesium hydroxide, zinc borate, red phosphorus, and the like).

Examples of ultraviolet absorbers include benzotriazole type, benzophenone type, salicylic acid type, acrylate type, and the like.

Examples of antibacterial agents include quaternary ammonium salts, pyridine compounds, organic acid, organic acid esters, halogenated phenol, organic iodine, and the like.

Examples of surfactants include nonionic, anionic, cationic, or amphoteric surfactants. Examples of nonionic surfactants include polyethylene glycol type nonionic surfactants such as higher alcohol ethylene oxide adduct, fatty acid ethylene oxide adduct, higher alkylamine ethylene oxide adduct, and polypropylene glycol ethylene oxide adduct; polyhydric alcohol type nonionic surfactants such as polyethylene oxide, fatty acid ester of glycerin, fatty acid ester of pentaerythritol, sorbitol or fatty acid ester of sorbitol, alkyl ether of polyhydric alcohol, and aliphatic amide of alkanolamine; and the like. Examples of anionic surfactants include sulfate ester salts such as alkali metal salts of higher fatty acids; sulfonate salts such as alkylbenzene sulfonates, alkyl sulfonates, and paraffin sulfonates; phosphate ester salts such as higher alcohol phosphoric acid ester salts; and the like. Examples of cationic surfactants include quaternary ammonium salts such as alkyltrimethylammonium salts. Examples of amphoteric surfactants include amino acid type amphoteric surfactants such as higher alkylaminopropionate; betaine type amphoteric surfactants such as higher alkyldimethylbetaine and higher alkyldihydroxyethyl betaine; and the like.

Examples of antistatic agents include the above-mentioned surfactants, fatty acid ester, and polymer type antistatic agents. Examples of fatty acid esters include esters of stearic acid and oleic acid, and examples of polymer type antistatic agents include polyether ester amides.

An addition amount of various additives such as fillers, lubricants, plasticizers, mold release agents, antioxidants, flame retardants, ultraviolet absorbers, antibacterial agents, surfactants, and antistatic agents can be appropriately determined according to usage applications within a range not impairing the effects of the present disclosure.

### 1.7. Method for manufacturing thermoplastic elastomer composition

The thermoplastic elastomer composition according to the present embodiment can be manufactured by manufacturing a mixture containing the component (A), the component (B), and the component (C), adding the component (D) or adding the component (D) and a crosslinking aid, and dynamically crosslinking the mixture.

Kneading and a heat treatment which are for dynamic crosslinking are preferably carried out under an atmosphere of an inert gas such as nitrogen or carbon dioxide. A temperature in the heat treatment can be set to be within a range between a melting point of the component (B) to 300°C, and it is preferably within a range of 80°C or higher and 270°C or lower, and is more preferably within a range of 100°C or higher and 250°C or lower. A kneading time is preferably 1 minute or longer and 20 minutes or shorter, and is more preferably 1 minute or longer and 10 minutes or shorter.

Kneading can be performed using a known device such as a mixing roll, an intensive mixer (for example, a Banbury mixer or a kneader), a single-screw extruder, or a twin-screw extruder, but it is preferable to use a non-open type device from the viewpoint of inhibiting oxidative deterioration of the composition. Furthermore, the thermoplastic elastomer composition according to the present embodiment is melt-kneaded at 80°C to 200°C, preferably 100°C to 150°C using a mixer such as a Banbury mixer, and then (D) a crosslinking agent is put thereto, and thereby the kneaded product, which has been melt-kneaded at 140°C to 200°C, can be extruded and pelletized by a feeder ruder.

### 2.2. Molded body

A molded body according to the embodiment of the present disclosure is produced using the above-described thermoplastic elastomer composition. The molded body according to the present embodiment can be manufactured by a known molding method.

Examples of molding methods include an extrusion molding method, a press molding method, an injection molding method, a calendar molding method, and a hollow molding method. Furthermore, the thermoplastic elastomer composition according to the present embodiment may be molded into a sheet-shape by these molding methods, and thereafter, the obtained sheet-shaped molded body may be secondarily processed by a thermoforming method or the like, or the obtained sheet-shaped molded body may be laminated with another material.

Examples of other materials that can be used for the lamination include cloth, resins, rubber, wood, and the like. Examples of cloth include woven fabrics, knitted fabrics, and non-woven fabrics of fibers containing cotton, linen, wool, rayon, polyester, nylon, vinylon, polypropylene, polyethylene, acrylic, aramid, and carbon-based fibers. Examples of resins include thermoplastic resins and thermosetting resins. Examples of rubber include thermoplastic elastomers and thermosetting elastomers (including vulcanized rubber) which has been molded into a film-shape or sheet-shape. The above-mentioned lamination can be carried out via an adhesive, but in a case of laminating polyethylene or polypropylene, the lamination may be carried out by heat-welding without using an adhesive.

The molded body is preferably used as a damping material. Examples of damping materials include damping members, shock absorbers, vibration dampeners, and resonant absorbers. In particular, because the molded body has high stress absorption properties at room temperature, it is suitable as damping materials used at room temperature, and is specifically suitable for usage applications such as parts for vehicles including automobiles, railway vehicles, and the like, civil engineering and building material supplies, sanitary supplies, and electrical appliances.

### [Parts for vehicles]

Parts for vehicles to which the above-mentioned molded body can be applied include damping members such as sound insulation materials, interlayer films for laminated glass, weather strip materials, dam rubber, ceiling materials, interior sheets, bumper molding, side molding, air spoilers, air duct hoses, cup holders, side brake grips, shift knob covers, seat adjustment knobs, flapper door seals, wire harness grommets, rack and pinion boots, suspension cover boots, glass guide, inner belt line seals, roof guide, trunk lid seals, molded quarter wind gaskets, corner molding, glass encapsulation, food seals, glass run channels, secondary seals, various packings, bumper parts, body panels, side shields, glass run channels, instrument panel skins, door skins, ceiling skins, hoses, steering wheels, boots, wire harness covers, seat adjuster covers, sliding door rollers, airbag covers, engine mount, motor mount, subframe mount, stabilizer bushes, and suspension bushes; stick-on type damping sheets; coating type damping sheets; and the like.

### [Civil engineering and building material supplies]

Civil engineering and building material supplies to which the above-mentioned molded body can be applied include civil engineering materials and building materials such as ground improvement sheets, tarpaulins, water plates, and noise and vibration prevention walls; various gaskets and various sheets for civil engineering and construction; water blocking materials; joint materials; window frames for buildings; flooring and ceiling materials; seismic control walls for buildings in the building and housing field; seismic isolation devices such as vibration control (damping) dampers; vibration inhibiting grip materials used in rotating instruments such as electric drills; handles of tools; and the like.

### [Sanitary supplies]

Examples of sanitary supplies to which the above-mentioned molded body can be applied include sanitary supplies such as feminine hygiene products, disposable diapers, and toothbrush grips.

### [Electrical appliances]

Electrical appliances to which the above-mentioned molded body can be applied include sealing materials, packings, O-rings, belts, soundproofing materials, vibration dampers, and resonance prevention sheets, and wire covering materials such as speaker cone edges, cables, connectors, and plugs, which are in various electrical appliances such as televisions, various recorders, projectors, game consoles, digital cameras, home videos, electronic dictionaries, IC recorders, FAX, copiers, mobile terminals, doorphones, rice cookers, microwave ovens, combi ovens or combi microwaves, refrigerators, dishwashers, dish dryers, IH cooking heaters, hot plates, vacuum cleaners, washing machines, chargers, sewing machines, irons, dryers, electric bicycles, air purifiers, water purifiers, electric toothbrushes, lighting instruments, air conditioners, outdoor units of air conditioners, dehumidifiers, humidifiers, and weigh scales.

### [Other usage applications]

Examples of other usage applications for which the above-mentioned molded body is applied include sole materials, shoe cushions, anti-slip processing of gloves and socks, toys such as dolls, curing tapes, logo marks (for sportswear and sports shoes), carry bags, various packaging materials, covers for trucks, agricultural films, commercial aprons, tarpaulins, anti-vibration grommets for industrial machinery, cushioning materials, grips and core materials for sports equipment, elastic threads, non-woven fabrics, and damping materials, vibration-proofing materials, and cushioning materials which are laminated in multiple layers together with a metal plate.

### 3. Examples

Hereinafter, specific examples of the present disclosure will be described, but the present disclosure is not limited to these examples. In the following manufacturing examples, examples, and comparative examples, "%" is based on mass unless otherwise specified.

### 3.1. Manufacturing Example 1

### [Manufacturing of hydrogenated diene-based block copolymer]

24 kg of cyclohexane, 1 g of tetrahydrofuran, 1,200 g of 1,3-butadiene, and 3.3 g of n-butyllithium were added into a reaction container having a content of 50 liters substituted with nitrogen, and adiabatic polymerization was carried out from 70°C. After completion of the reaction, a temperature was adjusted to 5°C, and 340 g of tetrahydrofuran and 2,800 g of 1,3-butadiene were added to carry out adiabatic polymerization. After 30 minutes, 2.3 g of methyldichlorosilane was added, and the reaction was further carried out for 15 minutes.

After the reaction was completed, the mixture was stirred for 20 minutes while supplying hydrogen gas at 0.4 MPaG. The reaction solution was heated to 90°C, and 7.2 g of tetrachlorosilane was added thereto. After stirring the mixture for 20 minutes, 2.76 g of [bis(η5-cyclopentadienyl)titanium(flufuryloxy)chloride], 2.83 g of diethylaluminum chloride, and 1.18 g of n-butyllithium were added, and a hydrogenation reaction was carried out at a hydrogen pressure of 0.8 MPa for 2 hours. When absorption of hydrogen was completed, the reaction solution was returned to a normal temperature and a normal pressure, and the reaction solution was taken out from the reaction container. Then, the reaction solution was stirred and put into water, a solvent was removed by steam distillation, and thereby a hydrogenated diene-based block copolymer was obtained. The hydrogenated diene-based block copolymer obtained had a melting point of 95°C and a durometer hardness of 66 A.

### 3.2. Manufacture of composition

### [Example 1]

2.6 kg of an isobutene-isoprene copolymer (trade name "JSR BUTYL268" manufactured by JSR Corporation), 1.1 kg of a high-density polyethylene (trade name "NOVATEC HD HJ590N" manufactured by Japan Polyethylene Corporation), 1.1 kg of a hydrogenated C9 resin (trade name "Arkon P-140" manufactured by ARAKAWA CHEMICAL INDUSTRIES, LTD.), 400 g of a hydrogenated paraffin oil (trade name "PW-90" manufactured by Idemitsu Kosan Co., Ltd.), 5 g of a hindered phenolic anti-aging agent (trade name "Irganox 1010" manufactured by BASF Japan Ltd.), 100 g of silicone gum (trade name "BY-16-140" manufactured by Dow Toray Co., Ltd.), and 13 g of stearic acid (trade name "LUNAC S-50V" manufactured by Kao Corporation) were melt-kneaded at 130°C and 60 rpm for 3 minutes using a 7-L wonder kneader.

Next, 100 g of a brominated phenol formaldehyde resin (trade name "Tackirol 250-1" manufactured by Taoka Chemical Co., Ltd.) was added as a crosslinking agent, and the mixture was further kneaded at 60 rpm for 7 minutes. Thereafter, 10 g of a hindered amine-based anti-aging agent (trade name "ADK STAB LA-52" manufactured by ADEKA Corporation) was added, and the mixture was further kneaded at 60 rpm for 2 minutes. The obtained kneaded product was extruded and pelletized by a feeder ruder to obtain undried pellets having a diameter of 3 mm. Furthermore, the obtained pellets were dried at 60°C until a moisture content of the pellets reached 1,000 ppm, and thereby pellets were produced.

Injection molding of the manufactured pellets was performed using an injection molding machine with a mold clamping force of 110 tons, and using a sheet die with 120 mm × 120 mm × 2 mm (length × width × thickness) (gate shape: film gate, gate dimension: 120 mm × 0.5 mm) under conditions of a cylinder temperature of 240°C, a die temperature of 50°C, an injection rate of 20 cm³/sec, and a cooling time of 30 seconds. Thereby, sheet-shaped test pieces were produced.

### [Examples 2 to 30 and Comparative Examples 1 to 3]

The same operation as in Example 1 was carried out except that an amount of each raw material used was changed as shown in Tables 1 to 4 below. Thereby, pellets and sheet-shaped test pieces of each composition were produced.

### 3.3. Performance evaluation

Measurement conditions and the like for physical properties in the examples are as follows.

### 3.3.1. Resilience

### [Measurement of compression permanent deformation]

Using test pieces each obtained by punching out the sheet manufactured above into a circular sample with a diameter of 29 mm and laminating five sheets or six sheets, a compression permanent deformation was measured at a compression rate of 25%, a test temperature of 70°C, and a test time of 24 hours by a compression permanent deformation test in accordance with ISO815. An average value of each of the test pieces with five sheets or six sheets laminated was used for an value of compression permanent deformation (%). As a value of compression permanent deformation became smaller, resilience became excellent.

### 3.3.2. Molding workability

### [Measurement of MFR (melt flow rate)]

Using the pellets manufactured above, MFR (g/10 min) was measured at a load of 98 N and a test temperature of 230°C by an MFR test in accordance with ISO1133. As MFR became larger, molding workability became excellent.

### 3.3.3. Vibration absorption properties

### [Tan δ]

Using a test piece obtained by punching out the sheet manufactured above into a striped shape with a width of 5 mm and a length of 5 cm, tan δ was measured at a temperature of 23°C, a frequency of 1,000 Hz, and a deformation of 0.05% by dynamic viscoelasticity measurement in accordance with ISO6271-1. As a value of tan δ became larger, vibration absorption properties became excellent.

### 3.3.4. Cold resistance

### [Embrittlement temperature]

Using a test piece obtained by punching out the sheet manufactured above into a striped shape with a width of 6 mm and a length of 35 mm, an embrittlement temperature (°C) was evaluated by a low-temperature impact embrittlement test in accordance with ISO812. As an embrittlement temperature became lower, cold resistance became excellent.

### 3.3.5. Normal physical properties

### [Tensile characteristics]

Using a test piece obtained by punching out the sheet manufactured above with a JIS No. 6 dumbbell, tensile strength and tensile elongation were evaluated by a tensile test in accordance with ISO37.

### [Hardness]

Four sheets manufactured above were superposed, and hardness after 9 seconds was evaluated in accordance with ISO7619-2.

### 3.3.6. Gas barrier properties

### [Measurement of oxygen permeation coefficient]

The sheet manufactured above was remolded to a thickness of 500 µm by a hot press. Thereafter, an oxygen permeation coefficient (cc·mm/m²·24 hr·atm) was evaluated by a differential pressure method in accordance with ISO15105-1.

### 3.4. Evaluation results

Tables 1 to 4 below show compositions of the thermoplastic elastomer compositions produced in each of the examples and comparative examples, and evaluation results of each performance. Numerical values of raw materials of the thermoplastic elastomer compositions shown in Tables 1 to 4 below represent "parts by mass."

**[Table 1]**

| | Raw material name | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|
| Component (A) | BUTYL 268 | 100 | | 100 | 100 | 100 | 100 | 100 | 100 | 100 | |
| | BROMOBUTYL 2244 | | 100 | | | | | | | | |
| Elastomer component | HYBRAR 5127 | | | | | | | | | | 100 |
| Component (B) | HJ590N | 40 | 40 | 40 | 40 | 40 | 40 | 40 | 40 | 40 | 40 |
| Component (C) | ArkonP-140 | 40 | 40 | 40 | 40 | 40 | 40 | 40 | 40 | 40 | 40 |
| Softener | PW-90 | 15 | 15 | | | | | | 15 | 15 | 15 |
| | HV-1900 | | | 15 | | | | | | | |
| | Tetrax 3T | | | | 15 | | 15 | 15 | | | |
| | CLESEFE OIL H100 | | | | | 15 | | | | | |
| Filler | SB720 | | | | | | 15 | | | | |
| | ST-KE | | | | | | | 30 | | | |
| Component (D) | Tackirol 250-1 | 4 | 4 | 4 | 4 | 4 | 4 | 4 | 4 | | 4 |
| Crosslinking aid | Active zinc oxide AZO | | 2 | | | | | | | | |
| | SZ-PG | | | | | | | | 2 | | |
| Anti-aging agent | Irganox 1010 | 0.2 | 0.2 | 0.2 | 0.2 | 0.2 | 0.2 | 0.2 | 0.2 | 0.2 | 0.2 |
| Antacid | ADK STAB LA-52 | 0.4 | 0.4 | 0.4 | 0.4 | 0.4 | 0.4 | 0.4 | 0.4 | 0.4 | 0.4 |
| | KYOWAMAG MF150 | | 2 | | | | | | | | |
| Processing aid | BY16-140 | 4 | 4 | 4 | 4 | 4 | 4 | 4 | 4 | 4 | 4 |
| | METABLEN L-1000 | | | | | | | | 1 | | |
| | LUNAC S-50V | 0.5 | 0.5 | 0.5 | 0.5 | 0.5 | 0.5 | 0.5 | | 0.5 | 0.5 |
| Total | | 204.1 | 208.1 | 204.1 | 204.1 | 204.1 | 219.1 | 234.1 | 206.6 | 200.1 | 204.1 |

| Evaluation item | | | | | | | | | | | |
|---|---|---|---|---|---|---|---|---|---|---|---|
| Resilience | Compression permanent deformation [%] | 29 | 20 | 29 | 28 | 29 | 33 | 35 | 28 | 85 | 100 |
| Molding workability | MFR [g/10 min] | 23 | 18 | 17 | 19 | 23 | 13 | 14 | 25 | 50 | 12 |
| Vibration absorption properties | tan δ [-] | 0.54 | 0.52 | 0.56 | 0.57 | 0.58 | 0.6 | 0.61 | 0.53 | 0.55 | 0.67 |
| Cold resistance | Embrittlement temperature [°C] | -35 | -33 | -38 | -37 | -35 | -32 | -34 | -35 | -40 | 23°C or higher |
| Normal physical properties | Tensile strength [MPa] | 6.2 | 7 | 6.8 | 6.6 | 6.1 | 7.2 | 6.8 | 6.3 | 2.5 | 12.3 |
| | Tensile elongation [%] | 480 | 430 | 480 | 480 | 470 | 440 | 470 | 490 | 420 | 15 |
| | Hardness (Duro A, 9s) | 60 | 63 | 60 | 59 | 60 | 65 | 69 | 59 | 55 | 90 |
| Gas barrier properties | Oxygen permeation coefficient [cc · mm/m² · 24 hr · atm] | 300 | 270 | 420 | 380 | 660 | 290 | 240 | 310 | 450 | 600 |

**[Table 2]**

| | Raw material name | Example 9 | Example 10 | Example 11 | Example 12 | Example 13 | Example 14 | Example 15 | Example 16 | Comparative Example 3 |
|---|---|---|---|---|---|---|---|---|---|---|
| Component (A) | BUTYL 268 | 100 | 100 | 100 | 100 | 100 | 100 | 100 | 100 | 100 |
| Component (B) | HJ590N | | | 30 | 15 | 70 | 100 | | | 40 |
| | SA08A | 40 | | | | | | 40 | 40 | |
| | RMG06 | | 40 | | | | | | | |
| Component (C) | Arkon P-140 | 40 | 40 | 40 | 40 | 40 | 40 | 40 | 40 | |
| Softener | PW-90 | 15 | 15 | 15 | 15 | 15 | 15 | 15 | 15 | 15 |
| Component (D) | Tackirol 250-1 | 4 | 4 | 4 | 4 | 4 | 4 | | | 4 |
| | VULNOC DGM | | | | | | | | 2 | |
| | PERHEXA 25B-40 | | | | | | | 2 | 1 | |
| Crosslinking aid | TAIC | | | | | | | 2 | | |
| | VULNOC PM | | | | | | | 2 | | |
| Anti-aging agent | Irganox 1010 | 0.2 | 0.2 | 0.2 | 0.2 | 0.2 | 0.2 | 0.2 | 0.2 | 0.2 |
| Antacid | ADK STAB LA-52 | 0.4 | 0.4 | 0.4 | 0.4 | 0.4 | 0.4 | | | 0.4 |
| Processing aid | BY16-140 | 4 | 4 | 4 | 4 | 4 | 4 | 4 | 4 | 4 |
| | LUNAC S-50V | 0.5 | 0.5 | 0.5 | 0.5 | 0.5 | 0.5 | 0.5 | 0.5 | 0.5 |
| Total | | 204.1 | 204.1 | 194.1 | 179.1 | 234.1 | 264.1 | 205.7 | 202.7 | 164.1 |

| Evaluation item | | | | | | | | | | |
|---|---|---|---|---|---|---|---|---|---|---|
| Resilience | Compression [%] permanent deformation | 39 | 38 | 25 | 22 | 35 | 42 | 75 | 64 | 35 |
| Molding workability | MFR [g/10 min] | 21 | 22 | 15 | 7 | 30 | 42 | 70 | 5 | 20 |
| Vibration absorption properties | tan δ [-] | 0.49 | 0.48 | 0.57 | 0.6 | 0.51 | 0.43 | 0.48 | 0.49 | 0.32 |
| Cold resistance | Embrittlement temperature [°C] | -40 | -42 | -37 | -38 | -33 | -31 | -40 | -40 | -55 |
| Normal physical properties | Tensile strength [MPa] | 8.0 | 6.5 | 5.1 | 3.8 | 7.1 | 7.5 | 3.2 | 3.6 | 2.7 |
| | Tensile elongation [%] | 520 | 500 | 450 | 320 | 440 | 400 | 500 | 510 | 300 |
| | Hardness (Duro A, 9s) | 65 | 55 | 55 | 50 | 74 | 81 | 56 | 57 | 50 |
| Gas barrier properties | Oxygen permeation coefficient [cc·mm/m²·24 hr·atm] | 490 | 590 | 580 | 420 | 530 | 550 | 420 | 410 | 700 |

**[Table 3]**

| | Raw material name | Example 17 | Example 18 | Example 19 | Example 20 | Example 21 | Example 22 | Example 23 | Example 24 | Example 25 | Example 26 |
|---|---|---|---|---|---|---|---|---|---|---|---|
| Component (A) | BUTYL 268 | 100 | 100 | 100 | 100 | 100 | 100 | 100 | 100 | 100 | 100 |
| Component (B) | HJ590N | 40 | 40 | 40 | 40 | 40 | 40 | 40 | 40 | 40 | 40 |
| Component (C) | PETCOAL 130 | | | 40 | | | | | | | |
| | YS POLYSTER T145 | | | | 40 | | | | | | |
| | Arkon P-90 | 40 | | | | | | | | | |
| | Arkon P-140 | | | | | | | 30 | 15 | 60 | 80 |
| | I-MARV P-140 | | | | | 40 | | | | | |
| | T-REZ premium OP501 | | | | | | 40 | | | | |
| | ABSORTOMER EP1013 | | 40 | | | | | | | | |
| Softener | PW-90 | 15 | 15 | 15 | 15 | 15 | 15 | 15 | 15 | 15 | 15 |
| Component (D) | Tackirol 250-1 | 4 | 4 | 4 | 4 | 4 | 4 | 4 | 4 | 4 | 4 |
| Anti-aging agent | Irganox 1010 | 0.2 | 0.2 | 0.2 | 0.2 | 0.2 | 0.2 | 0.2 | 0.2 | 0.2 | 0.2 |
| Antacid | ADK STAB LA-52 | 0.4 | 0.4 | 0.4 | 0.4 | 0.4 | 0.4 | 0.4 | 0.4 | 0.4 | 0.4 |
| Processing aid | BY16-140 | 4 | 4 | 4 | 4 | 4 | 4 | 4 | 4 | 4 | 4 |
| | LUNAC S-50V | 0.5 | 0.5 | 0.5 | 0.5 | 0.5 | 0.5 | 0.5 | 0.5 | 0.5 | 0.5 |
| Total | | 204.1 | 204.1 | 204.1 | 204.1 | 204.1 | 204.1 | 194.1 | 179.1 | 224.1 | 244.1 |

| Evaluation item | | | | | | | | | | | |
|---|---|---|---|---|---|---|---|---|---|---|---|
| Resilience | Compression permanent deformation [%] | 32 | 34 | 45 | 43 | 28 | 27 | 26 | 23 | 36 | 45 |
| Molding workability | MFR [g/10 min] | 26 | 30 | 20 | 21 | 20 | 25 | 21 | 17 | 29 | 41 |
| Vibration absorption properties | tan δ [-] | 0.48 | 0.41 | 0.46 | 0.47 | 0.55 | 0.54 | 0.5 | 0.42 | 0.57 | 0.59 |
| Cold resistance | Embrittlement temperature [°C] | -39 | -45 | -27 | -26 | -35 | -34 | -42 | -48 | -27 | -22 |
| Normal physical properties | Tensile strength [MPa] | 6.3 | 5.2 | 5.4 | 5.5 | 6.3 | 6.1 | 6.1 | 6.0 | 6.3 | 6.4 |
| Normal physical properties | Tensile elongation [%] | 470 | 430 | 360 | 360 | 470 | 490 | 500 | 520 | 420 | 340 |
| Normal physical properties | Hardness (Duro A, 9s) | 59 | 55 | 65 | 65 | 61 | 61 | 56 | 52 | 66 | 74 |
| Gas barrier properties | Oxygen permeation coefficient [cc·mm/m²·24 hr·atm] | 380 | 420 | 570 | 570 | 320 | 340 | 600 | 400 | 380 | 550 |

**[Table 4]**

| | Raw material name | Example 27 | Example 28 | Example 29 | Example 30 |
|---|---|---|---|---|---|
| Component (A) | BUTYL 268 | 100 | 100 | 100 | 100 |
| Component (B) | HJ590N | 40 | 40 | 40 | 40 |
| Component (C) | T-REZ premium OP501 | 40 | 40 | 40 | 40 |
| Component (E) | Hydrogenated diene-based block copolymer obtained in Manufacturing Example 1 | | 10 | | |
| | INFUSE 9100 | | | 10 | |
| Softener | PW-380 | 15 | 15 | 15 | 15 |
| Component (D) | Tackirol 250-1 | 4 | 4 | 4 | 4 |
| Crosslinking aid | Zinc carbonate | 0.6 | 0.6 | 0.6 | 0.6 |
| Anti-aging agent | Irganox 1010 | 0.2 | 0.2 | 0.2 | 0.2 |
| | NOCRAC MBZ | | | | 0.4 |
| Antacid | ADK STAB LA-52 | 0.4 | 0.4 | 0.4 | 0.4 |
| Processing aid | BY16-140 | 4 | 4 | 4 | 4 |
| Total | | 204.2 | 214.2 | 214.2 | 204.6 |

| Evaluation item | | | | | |
|---|---|---|---|---|---|
| Resilience | Compression permanent deformation [%] | 27 | 22 | 24 | 26 |
| Molding workability | MFR [β/10 min] | 25 | 27 | 29 | 50 |
| Vibration absorption properties | tan δ [-] | 0.54 | 0.56 | 0.53 | 0.55 |
| Cold resistance | Embrittlement temperature [°C] | -34 | -35 | -34 | -35 |
| Normal physical properties | Tensile strength [MPa] | 6.1 | 8.0 | 7.1 | 5.9 |
| | Tensile elongation [%] | 490 | 610 | 530 | 480 |
| | Hardness (Duro A, 9s) | 61 | 60 | 60 | 61 |
| Gas barrier properties | Oxygen permeation coefficient [cc·mm/m²·24 hr·atm] | 340 | 320 | 330 | 350 |

The following raw materials were used as the raw materials listed in Tables 1 to 4.

### [Component (A)]

- BUTYL 268: an isobutene-isoprene copolymer manufactured by JSR Corporation, Tg = -70°C
- BROMOBUTYL 2244: a butylated isobutene-isoprene copolymer manufactured by JSR Corporation, Tg = -70°C

### [Elastomer component]

H YBRAR 5127: vinyl SIS manufactured by Kuraray Co., Ltd., Tg = 8°C

### [Component (B)]

- HJ590N: polyethylene manufactured by Japan Polyethylene Corporation, MI = 40
- SA08A: polypropylene manufactured by Japan Polyethylene Corporation, MFR = 75
- RMG06: polypropylene manufactured by Japan Polyethylene Corporation, MFR = 60

### [Component (C)]

- PETCOAL 130: a non-hydrogenated C9 petroleum resin manufactured by TOSOH CORPORATION
- YS POLYSTER T145: a terpene phenolic resin manufactured by YASUHARA CHEMICAL CO., LTD.
- Arkon P-90: a hydrogenated C9 petroleum resin manufactured by ARAKAWA CHEMICAL INDUSTRIES, LTD.
- Arkon P-140: a hydrogenated C9 petroleum resin manufactured by ARAKAWA CHEMICAL INDUSTRIES, LTD.
- I-MARV P-140: a hydrogenated dicyclopentadiene aromatic petroleum resin manufactured by Idemitsu Kosan Co., Ltd.
- T-REZ premium OP501: a hydrogenated dicyclopentadiene resin manufactured by JXTG Nippon Oil & Energy Corporation
- ABSORTOMER EP1013: a 4-methyl-1-pentene-α-olefin copolymer manufactured by Mitsui Chemicals, Inc.

### [Component (E)]

I NFUSE 9100: an ethylene-(ethylene-octene) block copolymer manufactured by Dow Chemical Co., Ltd., melting point: 120°C, durometer hardness: 75 A

### [Softener]

- PW-90: a hydrogenated paraffin oil manufactured by Idemitsu Kosan Co., Ltd.
- PW-380: a paraffin oil manufactured by Idemitsu Kosan Co., Ltd.
- HV-1900: poly 1-butene manufactured by JXTG Nippon Oil & Energy Corporation
- Tetrax 3T: polyisobutylene manufactured by JXTG Nippon Oil & Energy Corporation
- CLESEFE OIL H100: a hydrogenated naphthenic oil manufactured by JXTG Nippon Oil & Energy Corporation

### [Filler]

- SB720: carbon black manufactured by Asahi Carbon Co., Ltd.
- ST-KE: calcined kaolin manufactured by Shiraishi Calcium

### [Component (D)]

- Tackirol 250-1: a brominated phenol formaldehyde resin manufactured by Taoka Chemical Co., Ltd.
- VULNOC DGM: an O,O'-dibenzoyl-p-quinone dioxime manufactured by OUCHI SHINKO CHEMICAL INDUSTRIAL CO., LTD.
- PERHEXA 25B-40: a 2,5-dimethyl-2,5-di(tert-butylperoxy)hexane manufactured by NOF CORPORATION

### [Crosslinking aid]

- Active zinc oxide AZO: a zinc oxide manufactured by Shodo Chemical Industry Co., Ltd.
- Zinc carbonate: a zinc carbonate manufactured by Shodo Chemical Industry Co., Ltd.
- SZ-PG: a zinc stearate manufactured by Sakai Chemical Industry Co., Ltd.
- TAIC: a triallyl isocyanurate manufactured by Mitsubishi Chemical Corporation
- VULNOC PM: an m-phenylene dimaleimide manufactured by OUCHI SHINKO CHEMICAL INDUSTRIAL CO., LTD.

### [Anti-aging agent]

- Irganox 1010: a hindered phenolic compound manufactured by BASF
- NOCRAC MBZ: a 2-mercaptobenzimidazole zinc salt manufactured by OUCHI SHINKO CHEMICAL INDUSTRIAL CO., LTD.

### [Antacid]

- ADK STAB LA-52: a hindered amine compound manufactured by ADEKA Corporation
- KYOWAMAG MF150: a magnesium oxide manufactured by Kyowa Chemical Industry Co., Ltd.

### [Processing aid]

- BY16-140: a polyether-modified silicone oil manufactured by Dow Toray Co., Ltd.
- METABLEN L-1000: an acrylic mold release agent manufactured by Mitsubishi Chemical Corporation
- LUNAC S-50V: stearic acid manufactured by Kao Corporation

Based on the evaluation results in Table 1, it was found that Comparative Example 1 not containing the component (D) and Comparative Example 2 not containing the component (A) had a large compression permanent deformation and were inferior in resilience. Furthermore, by changing the component (A) to a material having a higher Tg, cold resistance remarkably deteriorated.

Based on the evaluation results in Table 2, Comparative Example 3 not containing the component (C) had a result that tensile strength was inferior.

Based on the results of Tables 1 to 4, it was found that the molded body manufactured from the thermoplastic elastomer compositions of Examples 1 to 30 had a particularly excellent balance between resilience and vibration absorption properties at 23°C, and thus had excellent damping properties at room temperature.

The present disclosure is not limited to the above-described embodiments, and various modifications can be made. The present disclosure includes substantially the same configurations as those described in the embodiments (for example, configurations with the same function, method, and results, or configurations with the same purpose and effects). In addition, the present disclosure also includes a configuration in which a non-essential part of the configurations described in the above embodiments is replaced with another configuration. Furthermore, the present disclosure also includes a configuration that exhibits the same effects as those of the configurations described in the above embodiments, or a configuration that can achieve the same purpose as that of the configurations described in the above embodiments. Furthermore, the present disclosure also includes a configuration in which a known technique is added to the configurations described in the above embodiments.

A thermoplastic elastomer composition according to the present disclosure includes a component (A): an elastomer having a glass transition temperature of 0°C or lower, having at least one structural unit of a structural unit that is a hydrogenated isoprene-derived structure and an isobutene-derived structural unit, and having an unsaturated bond; a component (B): an α-olefin-based thermoplastic resin (where a 4-methyl-1-pentene α-olefin copolymer and a case corresponding to a component (E) to be described later are excluded); a component (C): an aromatic petroleum resin, an aliphatic petroleum resin, an aliphatic/aromatic petroleum resin, a dicyclopentadiene-based petroleum resin, a terpene resin, a rosin derivative, a 4-methyl-1-pentene α-olefin copolymer, and hydrogenated substances thereof; and a component (D): a crosslinking agent, in which the thermoplastic elastomer composition is formed by dynamic crosslinking of a mixture containing the component (A), the component (B), and the component (C) in the presence of the component (D).

## Claims

1. A thermoplastic elastomer composition comprising:
a component (A): an elastomer having a glass transition temperature of 0°C or lower, having at least one structural unit of a structural unit that is a hydrogenated isoprene-derived structure and an isobutene-derived structural unit, and having an unsaturated bond;
a component (B): an α-olefin-based thermoplastic resin (where a 4-methyl-1-pentene α-olefin copolymer and a case corresponding to a component (E) to be described later are excluded);
a component (C): an aromatic petroleum resin, an aliphatic petroleum resin, an aliphatic/aromatic petroleum resin, a dicyclopentadiene-based petroleum resin, a terpene resin, a rosin derivative, a 4-methyl-1-pentene α-olefin copolymer, and hydrogenated substances thereof; and
a component (D): a crosslinking agent,
wherein the thermoplastic elastomer composition is formed by dynamic crosslinking of a mixture containing the component (A), the component (B), and the component (C) in the presence of the component (D).

2. The thermoplastic elastomer composition according to claim 1, wherein the component (A) is an isobutene-isoprene copolymer.

3. The thermoplastic elastomer composition according to claim 1 or 2, wherein the component (D) is a polycondensation product of a phenol compound and an aldehyde.

4. The thermoplastic elastomer composition according to any one of claims 1 to 3, wherein a glass transition temperature of the component (C) is 50°C or higher.

5. The thermoplastic elastomer composition according to any one of claims 1 to 4, wherein 20 to 90 parts by mass of the component (B) and 20 to 70 parts by mass of the component (C) are contained with respect to 100 parts by mass of the component (A).

6. The thermoplastic elastomer composition according to any one of claims 1 to 5, further comprising:
a component (E): a polymer having a structure represented by General Formula (1), having a melting point of 25°C or higher, and having a durometer hardness of 90 A or less, 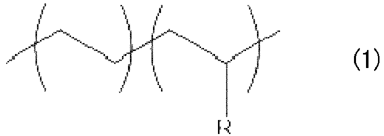
(in Formula (1), R represents an alkyl group having 1 to 8 carbon atoms).

7. The thermoplastic elastomer composition according to claim 6 or 7,
wherein the component (E) comprises the following hydrogenated diene-based block polymer,
hydrogenated diene-based block polymer: a hydrogenated substance which is a triblock polymer represented by an A-B-A triblock polymer, in which a content of a 1,2-vinyl group in the A block is less than 25 mol% and a content of a 1,2-vinyl group in the B block is 25 mol% or more; a total content of the A blocks is 5 to 90 mass% and a content of the B block is 10 to 95 mass% in a case where a total mass of the triblock polymer is 100 mass%; 80% or more of double bonds derived from a conjugated diene monomer unit contained in the triblock polymer are hydrogenated; and a number average molecular weight after hydrogenation is 50,000 to 700,000.

8. The thermoplastic elastomer composition according to claim 6, wherein 3 to 30 parts by mass of the component (E) are contained with respect to 100 parts by mass of the component (A).

9. A molded body which is produced using the thermoplastic elastomer composition according to any one of claims 1 to 8.

10. The molded body according to claim 9, which is a damping member.

11. The molded body according to claim 9, which is a shock absorber.

12. The molded body according to claim 9, which is a vibration dampener.

13. The molded body according to claim 9, which is a resonant absorber.
